# FASCICULE DE BREVET EUROPEEN

(11) **EP 0 743 655 B1**
(45) Date de publication et mention de la délivrance du brevet: **24.02.1999**
(21) Numéro de dépôt: 96401021.9
(22) Date de dépôt: 10.05.1996
(51) Int. Cl.: H01B 3/30, C08K 5/01, C08L 75/04

(54) **Composition diélectrique réticulable**
Vernetzbare dielektrische Zusammensetzung
Cross-linkable dielectric composition

(30) Priorité: 19.05.1995 FR 9505989
(43) Date de publication de la demande: 20.11.1996
(73) Titulaire: ELF ATOCHEM S.A., 92800 Puteaux, Hauts-de-Seine (FR)
(72) Inventeur: Berger, Noelle, 69130 Ecully (FR); Jay, Pierre, 69370 Saint Didier aux Monts d'Or (FR)

(56) Documents cités:
- US-A- 4 060 583
- PATENT ABSTRACTS OF JAPAN vol. 009, no. 052 (C-269), 6 Mars 1985 & JP-A-59 191771 (MATSUSHITA DENKO KK), 30 Octobre 1984,

## Description

L'invention concerne une composition diélectrique réticulable à base de polyol polydienique, d'un polyisocyanate et d'une charge inerte liquide conservant avant réticulation une viscosité suffisamment faible à une température donnée pour permettre son utilisation, notamment, pour l'imprégnation de diélectriques solides tels que contenus dans les condensateurs, câbles, transformateurs de mesure.

Cette composition, liquide pendant l'imprégnation, devient un solide isolant après la réticulation.

L'invention concerne également un procédé de préparation de ladite composition.

Le domaine d'application concerne tout particulièrement celui des appareils électriques fonctionnant sous tensions alternatives ou continues et dont les isolations sont soumises à des champs électriques élevés, supérieurs à 10 kV/mm.

Pour ces appareils, une des fonctions principales des liquides d'imprégnation est le remplacement de la totalité de l'air contenu dans les cavités des isolants solides.

La présence d'air dans les isolants solides conduit à des décharges partielles entraînant la destruction du diélectrique et donc de l'appareil.

Dans certains cas, transformateurs haute-tension, câbles à circulation d'huile, l'isolant joue également le rôle de fluide de transfert thermique pour évacuer les calories produites dans lesdits appareils par effet joule.

Les isolants électriques liquides présentent cependant des inconvénients tels que la possibilité de s'échapper des appareils en cas de fuite avec comme conséquences défavorables, le risque de pollution de l'environnement par le liquide et le claquage de l'appareil électrique.

Ils présentent d'autre part l'inconvénient d'avoir une plus faible tension de claquage que les isolants électriques solides.

De nombreuses tentatives ont été faites pour imprégner les isolations haute-tension avec des systèmes liquides solidifiables pour tous les appareils électriques pour lesquels la présence d'un liquide n'est pas indispensable pour évacuer les calories.

Cependant, ces tentatives ont toutes échoué dans le domaine d'application concerné, c'est à dire les utilisations haute-tension à gradient de tension élevé.

S'agissant des liquides solidifiables, deux types de composés ont été proposés.

Le premier type consiste en des liquides organiques cristallisables comme des cires de paraffine microcristalisées. Pour les produits de ce type, bien que possédant de bonnes propriétés diélectriques, on observe toujours des retraits dus à la cristallisation qui entraînent la présence de cavités dans les isolations solides imprégnées.

Le deuxième type de liquides solidifiables consiste en des systèmes à 1 ou 2 composants polycondensables et/ou réticulables, plus ou moins chargés notamment par un liquide inerte afin de minimiser le retrait.

De tels systèmes sont décrits dans la demande de brevet japonais publiée le 01.09.1986 sous le N° 61-197620.

Cependant, les propriétés diélectriques de ces produits sont médiocres ce qui interdit leurs utilisations dans le domaine d'application concerné à savoir les isolations haute tension à gradient de tension élevé.

En particulier, l'angle de perte ou facteur de dissipation diélectrique, ci-après désigné par tangente delta (tanδ) est trop élevé.

Ainsi, dans la demande de brevet japonais ci-dessus mentionnée, la tanδ des produits revendiqués est toujours supérieure à 5.10⁻² à 20° C, température de la norme (JIS K-6911).

On peut noter d'ailleurs dans cette demande que les compositions revendiquées sont destinées à l'enrobage des bobines de condensateur.

Le brevet US 4 060 583 décrit des compositions réticulables à 2 composants à base d'un polyol, d'un polyisocyanate et d'un liquide organique insoluble dans l'eau tel que le dodécylbenzène. Ces compositions, présentant une viscosité au moins égale à 50000 cP (ou m Pa.s) à température ambiante, sont utilisées pour remplir des cavités dans des connecteurs éléctriques. Une fois les 2 composants mélangés, la réticulation est rapide et la viscosité après 24 heures est très élevée (100000 cP à 25°C et 100 cP à 100°C).

On a maintenant trouvé une composition diélectrique d'imprégnation réticulable comprenant au moins un polyol polydiénique, au moins un 25 polyisocyanate et au moins une charge liquide chimiquement inerte, caractérisée en ce que la fonctionnalité du polyisocyanate est supérieure ou égale à 2 et, de préférence, comprise entre 2,2 et 4 et en ce que l'on utilise une quantité pondérale de la charge liquide chimiquement inerte supérieure à 90 % de la composition pour conserver une viscosité inférieure à 50 mPa.s à la température d'imprégnation comprise entre 20°C et 90°C pendant une durée au moins égale à 1 jour et pour obtenir une tangente à δ (tan δ) à 20°C et sous 50 Hz, après réticulation complète, inférieure à 0,02 et, de préférence inférieure à 0,01, et en ce que la charge chimiquement inerte n'est pas un alkylbenzene.

On désigne présentement par température d'imprégnation la température à laquelle la composition selon l'invention est amenée pour imprégner une isolation solide telle qu'un film plastique utilisable notamment dans des condensateurs.

Selon la présente invention, pendant la durée d'imprégnation précédemment définie, la viscosité de la composition peut évoluer mais doit rester inférieure à environ 50 mPa.s.

Selon la présente invention, on utilisera une quantité pondérale de charge liquide chimiquement inerte supérieure à 90 % et, de préférence, une quantité comprise entre 92 % et 96 % de la composition.

Selon la présente invention, la charge liquide chimiquement inerte est un liquide isolant, pouvant solubiliser totalement les polyols polydiéniques et les polyisocyanates, choisie parmi les esters diélectriques qui sont par exemple des produits de réaction d'alcools polyvalents tels que le pentaérythritol avec des acides carboxyliques monovalents tels que l'acide n-heptanoïque ; les phtalates d'alkyle tels que le phtalate de dibutyle ; le phtalate de dioctyle, les composés alkylpolyaromatiques comme le monoisopropylbiphényle (MIPB), les phényl-xylyléthanes (PXE) ; les mélanges de benzyltoluénes et benzyl-benzyltoluènes tels que ceux décrits notamment dans le brevet européen N° 136230 ; les mélanges de mono-et bis (méthylbenzyl)xylènes tels que ceux décrits dans la demande de brevet européen N° 0443899; les mélanges de benzyltoluène et de diphényléthane ; les huiles végétales diélectriques telles que les huiles de colza et les huiles de maïs, ainsi que la combinaison d'au moins deux des liquides isolants précédemment mentionnés.

De préférence, on utilisera comme charge liquide chimiquement inerte des mélanges de benzyltoluénes et de benzyl-benzyltoluènes comprenant de 50 % à 90 % en poids de benzyltoluénes (mélange des isomères o, m et p) et de 50 % à 10 % en poids de benzyl-benzyltoluènes, des esters diélectriques tels que le dibutyl sébacate et le dioctyle adipate, des phtalates d'alkyle tel que le phtalate de dioctyle ou des huiles végétales diélectriques tel que l'huile de colza.

Selon la présente invention, la charge liquide chimiquement inerte présente une viscosité à 20°C au plus égale à 100 mPa.s, et de préférence, comprise entre 4 et 30 mPa.s mesurée selon la norme ASTM D445.

Selon la présente invention, le polysiocyanate utilisé peut être choisi parmi les polyisocyanates aromatiques, aliphatiques, cycloaliphatiques et ceux qui contiennent dans leur molécule un cycle isocyanurate, ayant au moins deux fonctions isocyanate dans leur molécule, susceptibles de réagir avec des fonctions hydroxyle d'un polyol pour former un réseau polyuréthane tri-dimensionnel provoquant une gélification de la composition.

A titre d'illustration de polyisocyanates aromatiques utilisables selon la présente invention, on citera le 4,4'-diphénylméthane diisocyanate (MDI), les MDI polymériques, le triphényl-méthane triisocyanate.

A titre d'illustration de polyisocyanate aliphatique utilisable selon la présente invention, on citera le biuret du diisocyanato-1,6 hexane

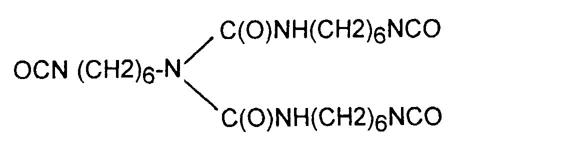

A titre d'illustration de polyisocyanates cycloaliphatiques, on citera l'isophorone diisocyanate (IPDI), le cyclohexyldiisocyanate (CHDI), le 4,4'-dicyclo-hexylméthane diisocyanate.

A titre d'illustration de polyisocyanates qui contiennent dans leur molécule le cycle isocyanurate, on citera les trimères de l'hexaméthylène diisocyanate commercialisés par la Société Rhône-Poulenc sous la dénomination TOLONATE HDT, le tris [1-(isocyanotométhyl)-1,3,3-triméthylcyclohexane] isocyanurate commercialisé par la Société HULS sous la dénomination VESTANAT T 1890/100.

La quantité de polyisocyanate selon la présente invention est choisie d'une façon telle que le rapport molaire NCO/OH est voisin de 1 et, de préférence compris entre 0,85 et 1,15.

Selon la présente invention, le polyol polydiénique est un oligomère de diène conjugué hydroxytélechélique qui peut être obtenu par différents procédés tels que la polymérisation radicalaire de diène conjugué ayant de 4 à 20 atomes de carbone en présence d'un amorceur de polymérisation tel que le peroxyde d'hydrogène ou un composé azoïque tel que l'azobis-2,2[méthyl-2,N-(hydroxy-2éthyl)propionamide] ou la polymérisation anionique de diène conjugué ayant de 4 à 20 atomes de carbone en présence d'un catalyseur tel que la naphtalène dilithium.

Selon la présente invention, le diène conjugué du polyol polydiénique est choisi dans le groupe comprenant le butadiène, l'isoprène, le chloroprène, le 1,3- pentadiène et le cyclopentadiène.

On ne sortirait pas de l'invention si on utilisait des oligomères hydroxytélécheliques de diènes conjugués époxydés sur la chaîne ainsi que des oligomères hydrogénés hydroxytélécheliques de diènes conjugués.

Selon la présente invention, les polyols polydiéniques peuvent avoir des masses molaires en nombre au plus égale à 7000 et de préférence comprises entre 1000 et 3000. Ils présentent des fonctionnalités allant de 1 à 5 et de préférence allant de 1,8 à 3 et une viscosité dynamique mesurée à 30°C au moins égale à 600 mPa.s.

A titre d'illustration de polyols polydiéniques, on citera les polybutadiènes hydroxylés commercialisés par la Société ELF ATOCHEM S.A. sous les dénominations Poly Bd® 45 HT et Poly Bd® 20 LM.

Selon la présente invention, la composition diélectrique peut comprendre en plus du polyol polydienique un ou plusieurs polyols de faible masse molaire.

Par polyol de faible masse molaire, on entend des polyols ayant des masses molaires allant de 50 à 800.

A titre d'illustration de tels polyols, on peut citer l'éthylène glycol, le propylène glycol, le diéthylène glycol, le dipropylène glycol, les polyétherpolyols, le butane diol-1,4, l'hexane diol-1,6, l'éthyl-2 hexane diol-1,3, le N,N bis(hydroxy-2 propyl)aniline, le méthyl-3 pentanediol-1,5, le triméthylol propane, le pentaérythritol, le bis phénol A propoxylé commercialisé par la Société AKZO sous la dénomination DIANOL 320 et le mélange d'au moins deux polyols précités.

Dans l'éventualité où l'on utilise un polyol de faible masse molaire, le rapport molaire NCO/OH devra être calculé en tenant compte des fonctions hydroxyles apportées par ledit polyol de faible masse molaire.

Bien que l'emploi d'un catalyseur ne soit pas indispensable, on pourra, dans certains cas, si on le désire, utiliser un catalyseur qui peut être choisi dans le groupe comprenant des amines tertiaires, des imidazoles et des composés organométalliques.

A titre d'illustration d'amines tertiaires, on peut citer le diaza-1,4bicyclo [2.2.2]octane (DABCO), la N,N,N',N",N"-pentaméthyldiéthylène triamine.

A titre d'illustration de composés organométalliques, on peut citer le dibutyldilaurate d'étain, le dibutylacétate d'étain, les dérivés organiques du bismuth.

La composition réticulable de la présente invention peut être réalisée par mélangeage, à température ambiante (environ 20°C) des divers constituants par tous moyens d'agitation suffisant pour assurer une bonne dispersion des constituants.

Cependant, la demanderesse a constaté qu'en opérant de cette façon, elle obtenait des compositions, certes réticulables ayant des viscosités au moment de l'imprégnation conformes à celles revendiquées dans la présente invention, mais ces compositions présentaient des propriétés diélectriques médiocres dans certains cas, notamment des tanδ élevées.

Dans le cas où les propriétés diélectriques s'avèrent médiocres, la demanderesse a trouvé un procédé de préparation de la composition selon la présente invention caractérisé en ce que l'on prépare d'abord, séparément, un mélange A en dissolvant dans une charge liquide chimiquement inerte un ou plusieurs polyols, un mélange B en dissolvant dans une charge liquide chimiquement inerte un ou plusieurs polyisocyanates, puis ensuite on met en contact séparément chacun des mélanges A et/ou B obtenus avec une terre adsorbante à une température comprise entre 20°C et 80°C.

Cette mise en contact peut se faire de deux façons différentes.

Selon une première façon d'opérer, on ajoute la terre adsorbante aux mélanges A et/ou B, on agite séparément pendant une durée au moins égale à une heure les mélanges A et/ou B contenant ladite terre adsorbante, puis on élimine des mélanges A et/ou B ladite terre adsorbante. Dans cette façon d'opérer, la terre adsorbante est utilisée, dans les mélanges A et/ou B, à raison de 0,1 à 5 parties en poids, et de préférence de 1 à 3 parties en poids pour 100 parties en poids de mélange.

Selon la présente invention, on peut ajouter aux mélanges A et/ou B, des quantités identiques ou différentes de terre adsorbante.

La terre adsorbante est éliminée des mélanges A et/ou B par les moyens connus de l'homme du métier à savoir filtration ou centrifugation.

Une deuxième façon d'opérer consiste à faire circuler les mélanges A et/ou B dans des colonnes séparées garnies de terre adsorbante de granulométrie appropriée.

Dans l'une ou l'autre variante du procédé, les quantités pondérales de charge liquide chimiquement inerte dans les mélanges A et/ou B peuvent être au moins égales à 40 % et, de préférence comprises entre 85 % et 99,5 % des mélanges A et/ou B.

A titre d'illustration de terres adsorbantes utilisables selon la présente invention, on citera la terre à foulon, les bentonites, les terres de diatomées, l'attapulgite, la silice activée.

L'efficacité de ces procédés peut être évaluée par la mesure de la tan δ du liquide à 20°C sous 50 Hz.

On ne sortirait pas du cadre de l'invention si on répétait séparément le procédé une ou plusieurs fois sur l'un ou l'autre des mélanges A et B ou sur les deux mélanges jusqu'à obtenir un niveau de propriétés diélectriques acceptable pour l'utilisation envisagée.

S'agissant du mélange B, la demanderesse a constaté que la teneur en fonction isocyanate était quasiment conservée.

Pour réaliser la composition diélectrique selon l'invention, on met en contact les mélanges A et B traités ou non-traités par l'une ou l'autre variante du procédé, en partie ou en totalité, avec éventuellement addition complémentaire de charge liquide pure chimiquement inerte.

Cette mise en contact peut être réalisée par tous moyens de mélangeage permettant d'assurer une bonne homogénéisation.

Les mélanges A et B peuvent également contenir un ou plusieurs additifs tels que anti-oxydants, époxydes, anthraquinone et dérivés.

L'homme du métier déterminera les quantités pondérales des mélanges A et B, ainsi que les quantités éventuellement ajoutées de charge liquide chimiquement inerte pure, à mettre en contact lors de la préparation de ladite composition de façon à obtenir une composition finale, comprenant au moins 90 % en poids de charge liquide chimiquement inerte et un rapport molaire NCO/OH compris entre 0,85 et 1,15.

La composition obtenue selon le procédé de l'invention est utilisable notamment comme agent d'impregnation des isolations solides contenues dans les appareils électriques (condensateurs, transformateurs, câbles haute tension).

La mise en contact de la composition et du substrat à imprégner est effectuée à une température comprise entre 20°C et 90°C généralement sous pression réduite dans un premier temps puis ensuite à pression atmosphérique.

Lorsque l'imprégnation est terminée, pour parfaire la réticulation et obtenir un produit solide, on peut augmenter la température jusqu'à 100°C, voire plus, pendant une courte durée.

La composition selon l'invention présente l'avantage de conduire à des isolations possédant une durée de vie améliorée et une meilleure résistance au claquage.

Elle présente également une faible tanδ, inférieure à 0,02 mesurée à 20°C. sous 50 Hz et des tensions de claquage élevées.

Les exemples qui suivent illustrent l'invention.

Les compositions ont été préparées en utilisant les constituants suivants :
- PolyBd® 45 HT (ci-après désigné par PolyBd) : polybutadiène hydroxylé de Mn égal à 2800 (déterminée par chromatographie d'exclusion stérique), présentant un indice d'hydroxyle I_{OH} exprimé en milliéquivalent par gramme (meq/g) égal à 0,83, une viscosité égale à 5000 mPa.s à 30°C et une densité égale à 0,90,
- Jarylec C 100 commercialisé par la Société ELF ATOCHEM S.A. (ci-après désigné par JARYLEC) : charge liquide chimiquement inerte constituée de 75 % en poids de benzyltoluénes et de 25 % en poids de benzyl-benzyltoluènes présentant une viscosité à 20°C de 6,5 mPa.s mesurée selon la norme ASTM D-445,
- Phtalate de dioctyle commercialisé par la société ELF ATOCHEM (ci-après désigné DOP) : charge liquide chimiquement inerte constituée d'orthophtalate de diéthylhexyle présentant une viscosité à 20° C égale à 80 mPa.s.
- Dibutylsébaçate (ci-après désigné DBS) présentant une viscosité à 20° C égale à 9,3 mPa.s.
- Huile de colza de qualité alimentaire présentant une viscosité à 20° C égale à 69,5 mPa.s.
- Tolonate HDT/LV (ci-après désigné par Tolonate) : tris(6-isocyanatohexyl) isocyanurate, présentant une teneur en NCO égale à 23 %, une fonctionnalité d'environ 3,4 et une viscosité à 25°C égale à 1200 (+/- 300) mPa.s,
- Voranol CP 455 commercialisé par la Société DOW CHEMICAL (ci-après désigné par Voranol) : polyétherpolyol de masse molaire égale à 450 présentant un I_{OH} égal à 6, 77 meq/g et une viscosité à 25°C égale à 330 mPa.s,
- Isonate M 143 (ci-après désigné par Isonate) commercialisé par la Société DOW CHEMICAL : MDI polymérique présentant une teneur en NCO égale à 30 %, une fonctionnalité égale à 2,2 et une viscosité à 20°C égale à 130 mPa.s,
- Terre adsorbante : attapulgite préalablement activée à 150°C.

### ◆ Préparation des compositions selon le procédé de l'invention

On dissout séparément dans du Jarylec d'une part, soit du PolyBd, soit un mélange de PolyBd et de Voranol dans les proportions de 92,25 % en poids de PolyBd pour 7,75 % en poids de Voranol (mélanges A), d'autre part, soit de l'lsonate, soit du Tolonate (mélanges B).

Les proportions des différents constituants sont reportées dans le tableau 1.

On ajoute à chacun des mélanges A et B, 3 g d'attapulgite pour 100 g de mélange, on agite ensuite les mélanges, séparément à température ambiante (environ 20°C) pendant 3 à 18 heures puis ensuite on filtre les mélanges sous pression réduite pour éliminer l'attapulgite.

Sur chacun des mélanges A et B, on mesure la tanδ à 20°C sous 50 Hz avant et après traitement sur attapulgite.

Les résultats sont reportés dans le tableau 1.

**TABLEAU 1**

| **COMPOSITIONS (% en poids)** | | | **Tanδ (20°C/50 Hz)** | |
|---|---|---|---|---|
| | | | **Avant traitement** | **Après traitement** |
| **A1** | Jarylec | 88 | 8,3 x 10⁻³ | 1,2 x 10⁻³ |
| | PolyBd + Voranol | 12 | | |
| **A2** | Jarylec | 79 | 8,7 x 10⁻³ | 0,23 x 10⁻³ |
| | PolyBd + Voranol | 21 | | |
| **A3** | Jarylec | 84 | 3 x 10⁻⁴ | 1,2 x 10⁻⁴ |
| | PolyBd | 16 | | |
| **B1** | Jarylec | 96 | 27,8 x 10⁻³ | 0,5 x 10⁻³ |
| | Isonate | 4 | | |
| **B2** | Jarylec | 87,2 | 37 x 10⁻³ | 3,4 x 10⁻³ |
| | Tolonate | 12,8 | | |
| **B3** | Jarylec | 86,5 | 34 x 10⁻³ | 14 x 10⁻³ |
| | Tolonate | 13,5 | | |

La composition B3 subit un second traitement sur attapulgite selon des conditions identiques au premier traitement. On constate que la tanδ est égale à 0,4 x 10⁻³ (20°C / 50 Hz).

Les teneurs en NCO ont été contrôlées avant et après traitement et on constate qu'elles sont quasiment identiques.

Ensuite, les mélanges A et B sont mis en contact dans un réacteur en verre muni d'une agitation.

Sur les compositions obtenues, on détermine :
- l'influence du taux de charge liquide chimiquement inerte (Jarylec) sur l'évolution de la viscosité,
- l'influence de la température d'imprégnation sur l'évolution de la viscosité,
- les qualités diélectriques de ces compositions en mesurant la tanδ et la tension de claquage.

### ◆ Influence du taux de Jarylec sur l'évolution de la viscosité

On prépare des compositions par mise en contact des mélanges A1 ou A2 avec le mélange B1 de façon à obtenir un rapport molaire NCO/OH égal à 0,915 et des quantités pondérales de Jarylec dans les compositions égales à 85 %, 90 % (compositions non conformes à l'invention), 92 % et 94 %, puis on abandonne les compositions à température ambiante et on enregistre la viscosité en fonction du temps.

Les résultats sont reportés sur le graphique 1.

Sur ce graphique, nous avons représenté en ordonnée, la viscosité des compositions en mPa.s et en abscisse, le temps en jours.

Dans ce graphique, on représente également par :
-o- la composition contenant 85 % en poids de Jarylec,
-□- la composition contenant 90 % en poids de Jarylec,
-Δ- la composition contenant 92 % en poids de Jarylec,
-▲- la composition contenant 94 % en poids de Jarylec.

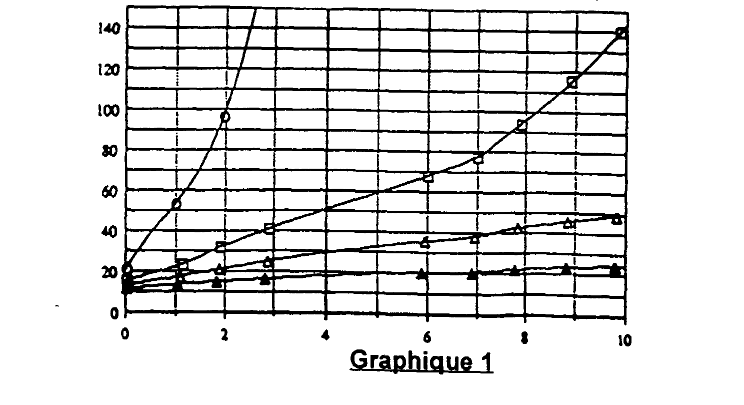

### ◆ Influence de la température d'imprégnation sur l'évolution de la viscosité

On a étudié l'évolution de la viscosité à différentes températures d'une composition obtenue par mise en contact des mélanges A3 et B2 de façon à obtenir un rapport molaire NCO/OH égal à 0,95 et une teneur pondérale en Jarylec égale à 94 %.

Cette composition est constituée de :
94 % de Jarylec,
5,2 % de PolyBd et,
0,8 % de Tolonate.

L'évolution de la viscosité de cette composition en fonction du temps à différentes températures est reportée sur le graphique 2. Sur ce graphique, nous avons représenté en ordonnée la viscosité en mPa.s et en abscisse, le temps en jours.

Dans ce graphique, on représente également par :
-□- l'évolution à 20°C de la viscosité en fonction du temps
-Δ- l'évolution à 40°C de la viscosité en fonction du temps
-▲- l'évolution à 60°C de la viscosité en fonction du temps
-●- l'évolution à 80°C de la viscosité en fonction du temps

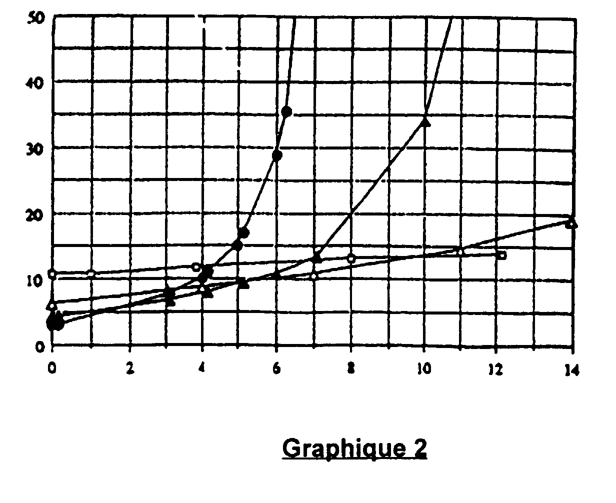

### ◆ Qualités diélectriques des compositions selon l'invention

La composition précédente (94 % de Jarylec, 5,2 % de PolyBd et 0,8 % de Tolonate) a été coulée dans une cellule de tanδ étanche, puis ensuite placée dans une étuve à 100°C et maintenue à cette température pendant 100 jours.

Les valeurs de tanδ ont été mesurées périodiquement au cours du temps de séjour à 100°C.

Les résultats sont reportés sur le graphique 3.

Sur ce graphique, nous avons représenté en ordonnée la tanδ à 100°C et en abscisse le temps en jours.

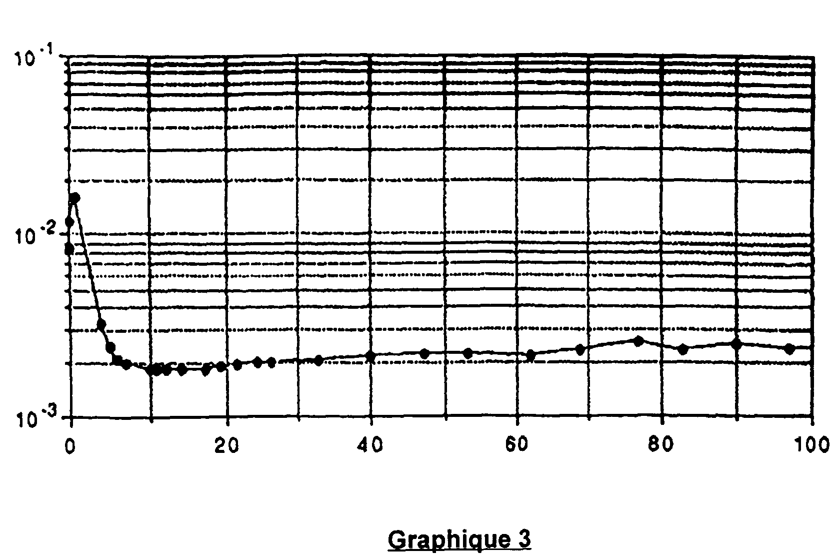

Après une semaine à 100°C, qui correspond au temps de formation du gel, la tanδ se stabilise à une valeur très basse, inférieure aux valeurs spécifiées pour une huile isolante neuve. Cette valeur est stable dans le temps à la température de 100°C.

On prépare une composition par mise en contact des mélanges A1 et B1 de façon à obtenir un rapport molaire NCO/OH égal à 0,91 et une teneur en Jarylec égale à 92 %.

Cette composition est constituée de :
92 % en poids de Jarylec,
6,3 % en poids de PolyBd,
0,5 % en poids de Voranol et,
1,2 % en poids d'isonate.

Cette composition est coulée dans trois cellules, à électrodes sphériques écartées de 1 mm, pour mesure de tension de claquage. Les trois cellules sont ensuite placées 8 jours à 80°C pour réticulation. Après retour à température ambiante, on procède à la mesure de la tension de claquage en rampe de tension alternative selon la norme CEI 156.

Des mesures de tension de claquage, effectuées dans les mêmes conditions, sont faites en utilisant les liquides isolants : huile minérale Univolt 52 et Jarylec, préalablement dégazés et filtrés sur filtre Millipore de porosité inférieure à 1 mm.

Les valeurs moyennes des résultats de tension de claquage pour le Gel et les deux liquides isolants sont les suivants :

| | |
|---|---|
| Composition selon l'invention | 95,2 kV |
| Huile minérale Univolt 52 | 40,0 kV |
| Jarylec | 44,5 kV |

On voit que la tension de claquage entre électrodes sphériques écartées de 1 mm est plus de 2 fois plus élevée pour la composition selon l'invention que celles obtenues avec les meilleurs liquides isolants utilisé pour transformateurs (Huile minérale) et pour condensateurs (Jarylec).

Compositions selon l'invention comportant des charges liquides chimiquement inertes autres que le Jarylec :

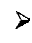 On prépare une composition comportant du DOP comme charge liquide. On mélange, sous atmosphère d'azote, 8,30 g de Tolonate à 940 g de DOP préalablement traité sur attapulgite. On ajoute ensuite 51,7 g de PolyBd et 3 mg/kg de Dibutyldilaurate d'étain ci-après désigné DBTL. La composition ainsi obtenue comporte 94 % de DOP, le rapport molaire NCO/OH est de 1,0.

Sur une partie de cette composition on détermine en viscosité à 60° C. La viscosité passe de 20mPa.s. à 75mPa.s. en 6 jours. Après 10 jours à 90° C, la composition est totalement réticulée.

Une autre partie de la composition est placée dans une cellule étanche de mesure du facteur de dissipation. Après 8 jours à 90° C et refroidissement, on mesure la tanδ à 20° C - 50Hz du gel obtenu. On trouve tanδ = 0,0031.

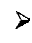 On prépare une composition comportant du DBS comme charge liquide. On mélange, sous atmosphère d'azote 8,88 g de Tolonate à 936,2 g de DBS préalablement traité sur attapulgite. On ajoute ensuite 55,4 g de PolyBd et 10 mg/kg de DBTL. La composition ainsi obtenue comporte 93,6 % de charge liquide inerte, le rapport molaire NCO/OH est de 1,0.

Sur une partie de cette composition on détermine la viscosité à 60° C Elle passe de 4 mPa.s. à 46 mPa.s. en 4 jours. Après 6 jours à 90° C, la composition est totalement réticulée.

Une autre partie de la composition est placée dans une cellule étanche de mesure du facteur de dissipation. Après 8 jours à 90° C et refroidissement on mesure la tanδ à 20° C-50Hz du gel obtenu. On trouve tan δ = 0,0079.

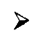 On prépare une composition comportant de l'huile de colza comme charge liquide. On traite l'huile de colza préalablement sur attapulgite. On mélange, sous atmosphère d'azote, 11,3 g de Tolonate à 915 g d'huile de colza. On ajoute ensuite 73,7 g de PolyBd et 5 mg/kg de DBTL. La composition ainsi obtenue comporte 91,5 % d'huile de colza. Le rapport molaire NCO/OH est de 1,0.

Sur une partie de cette composition on détermine la viscosité à 60° C. Elle passe de 34 mPa.s. à 92 mPa.s. en 2 jours. Après 8 jours à 60° C la composition est totalement réticulée.

Une autre partie de la composition est placée dans une cellule étanche de mesure du facteur de dissipation. Après 8 jours à 90° C et refroidissement on mesure la tanδ à 20° C et 50 Hz du gel obtenu. On trouve tanδ = 0,00029.

### ◆ Propriétés de condensateurs tout film polypropylène imprégnés par des compositions selon l'invention.

Pour illustrer l'excellent comportement d'isolations haute tension imprégnées avec des compositions selon l'invention, des essais ont été effectués en utilisant des bobinages de condensateurs pour tension continue comportant deux couches de films de polypropylène de 13,6 µm d'épaisseur.

Trois séries de 10 condensateurs ont été imprégnées, d'une part avec du Jarylec, d'autre part, avec deux compositions selon l'invention présentant un même rapport molaire NCO/OH égal à 0,95 et constituées respectivement par :
◆ 94 % de Jarylec,
   5,20 % de PolyBd et,
   0,80 % de Tolonate ci-après désigné par composition X et par
   ◆ 96 % de Jarylec, Jarylec,
      3,47 % de PolyBd et,
      0,53 % de Tolonate ci-après désigné par composition Y.

   L'imprégnation a été réalisée sous vide à température ambiante. Immédiatement après imprégnation, les maquettes ont été portées, pendant 6 jours à 40°C pour le Jarylec et la composition Y et à 60°C pour la composition X. Puis les maquettes ont été laissées 12 jours à 90°C pour formation thermique.
   Deux tests de durée de vie à température ambiante, sous très fort gradient de tension continue (390 et 350 V/µm dc) ont ensuite été effectués. Les résultats obtenus sont présentés dans les graphiques 4 et 5.
   Dans ces graphiques, on représente en ordonnée le nombre de condensateurs en vie et en abscisse le temps en heures.
   On représente également sur ce graphique par :
   - le Jarylec
   ---- la composition composition X
   ........ la composition Y

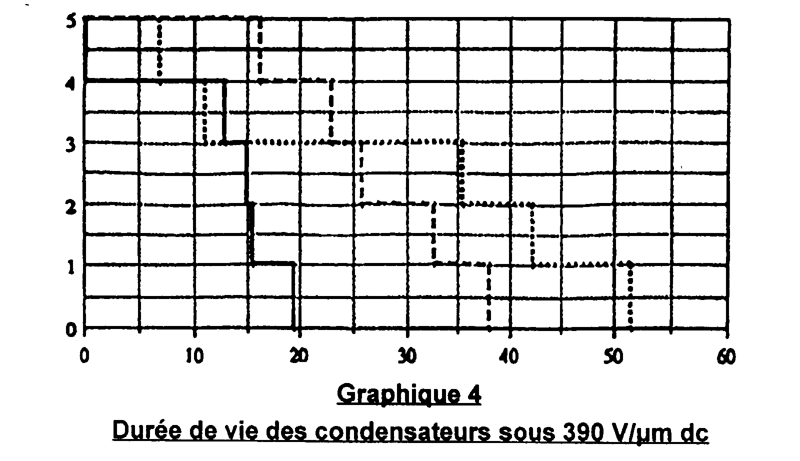

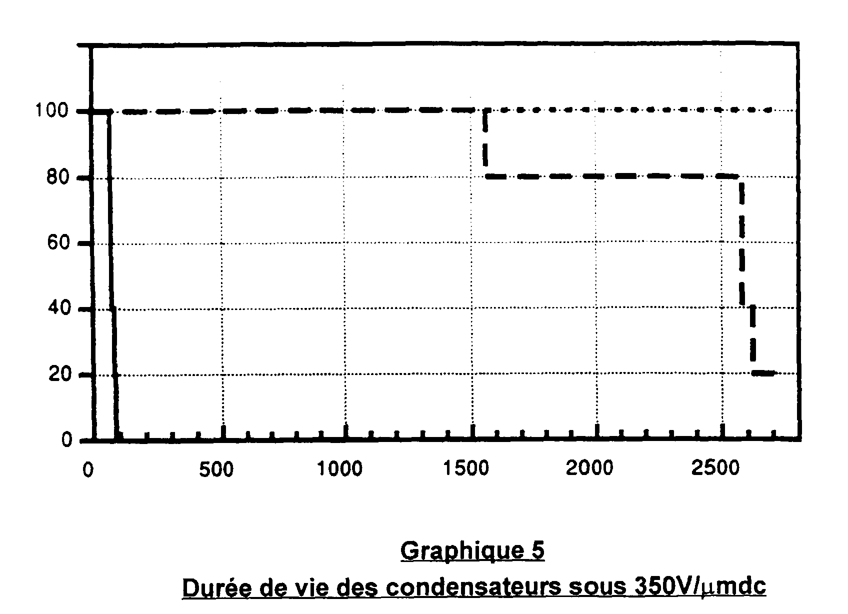

Les maquettes imprégnées avec des compositions selon l'invention ont conduit à des durées de vie (temps pour claquer la moitié des condensateurs) de 70 à 240 % supérieures à celles obtenues avec le Jarylec seul.

## Revendications

1. Composition diélectrique d'imprégnation réticulable comprenant au moins un polyol polydiénique, au moins un polyisocyanate et au moins une charge liquide chimiquement inerte, caractérisée en ce que la fonctionnalité du polyisocyanate est supérieure ou égale à 2, et en ce que l'on utilise une quantité pondérale de la charge liquide chimiquement inerte supérieure à 90 % de la composition pour conserver une viscosité inférieure à 50 mPa.s à la température d'imprégnation comprise entre 20°C et 90°C pendant une durée au moins égale à 1 jour et pour obtenir une tangente δ (tanδ) à 20°C et sous 50 Hz, après réticulation complète, inférieure à 0,02, et en ce que la charge chimiquement inerte n'est pas un alkylbenzène.

2. Composition selon la revendication 1, caractérisée en ce que la fonctionnalité du polyisocyanate est comprise entre 2,2 et 4.

3. Composition selon la revendication 1, caractérisée en ce que l'on utilise une quantité pondérale de charge liquide chimiquement inerte comprise entre 92 % et 96 % de la composition.

4. Composition selon la revendication 1, caractérisée en ce que la charge liquide chimiquement inerte est un liquide isolant choisi parmi les esters diélectriques, les composés alkylpolyaromatiques, les phtalates d'alkyle, les mélanges de benzyltoluènes et de benzyl-benzyltoluènes, les mélanges de mono- et bis (méthylbenzyl)xylènes, les mélanges de benzyltoluènes et de diphényléthane et les huiles végétales.

5. Composition selon la revendication 4, caractérisée en ce que le phtalate d'alkyle est le phtalate de dioctyle.

6. Composition selon la revendication 4, caractérisée en ce que l'ester diélectrique est le dibutylsébacate ou le dioctyl adipate.

7. Composition selon la revendication 4, caractérisée en ce que l'huile végétale est l'huile de colza.

8. Composition selon la revendication 4, caractérisée en ce que la charge liquide chimiquement inerte est un mélange de benzyltoluénes et de benzyl-benzyltoluènes comprenant de 50 % à 90 % en poids de benzyltoluénes (mélange des isomères o, m et p) et de 50 % à 10 % en poids de benzyl-benzyltoluènes.

9. Composition selon la revendication 8, caractérisée en ce que la charge liquide chimiquement inerte est un mélange comprenant 75 % en poids de benzyltoluènes et 25 % en poids de benzyl-benzyltoluènes.

10. Composition selon l'une des revendications 4 à 9, caractérisée en ce que la charge liquide chimiquement inerte a une viscosité à 20°C au plus égale à 100 mPa.s et de préférence comprise entre 4 et 30 mPa.s, mesurée selon la norme ASTM D445.

11. Composition selon la revendication 1, caractérisée en ce que le polyol polydiénique est un oligomère de diène conjugué hydroxytéléchélique.

12. Composition selon la revendication 11, caractérisée en ce que le diène conjugué est le butadiéne.

13. Composition selon la revendication 1, caractérisée en ce que le polyol polydiénique a une masse molaire en nombre au plus égale à 7000 et, de préférence comprise entre 1000 et 3000.

14. Composition selon la revendication 1, caractérisée caractérisée en ce que le polyol polydiénique présente une fonctionnalité allant de 1 à 5 et, de préférence, allant de 1,8 à 3.

15. Composition selon la revendication 1 ou 2, caractérisée en ce que le polyisocyanate contient dans sa molécule un cycle isocyanurate.

16. Composition selon la revendications 15, caractérisée en ce que le polyisocyanate est le tris [1-(isocyanotométhyl)-1,3,3-triméthyl-cyclohexane] isocyanurate ou le trimère de l'hexamethylène disocyanate.

17. Composition selon la revendication 1 ou 2, caractérisée en ce que le polyisocyanate est un polyisocyanate aromatique.

18. Composition selon la revendication 17, caractérisée en ce que le polyisocyanate est le 4,4'-diphényl-méthane diisocyanate (MDI) ou un MDI polymérique.

19. Composition selon la revendication 1 ou 2, caractérisée en ce que le polyisocyanate est un polyisocyanate cycloaliphatique.

20. Composition selon la revendication 19, caractérisée en ce que le polyisocyanate est le 4,4'-dicyclohexylméthane diisocyanate.

21. Composition selon la revendication 1, caractérisée en ce qu'elle comprend en plus un ou plusieurs polyols de faible masse molaire.

22. Composition selon la revendication 21 caractérisée en ce que le polyol a une masse molaire allant de 50 à 800.

23. Composition selon l'une quelconque des revendications 1 à 22, caractérisée en ce que le rapport molaire NCO/OH est voisin de 1 et, de préférence compris entre 0,85 et 1,15.

24. Composition selon l'une quelconque des revendications 1 à 23 caractérisée en ce que l'on utilise un catalyseur.

25. Procédé de préparation de la compositions diélectrique d'imprégnation réticulable selon l'une des revendications 1 à 24, caractérisé en ce que l'on prépare d'abord, séparément un mélange A en dissolvant dans une charge liquide chimiquement inerte un ou plusieurs polyols, un mélange B en dissolvant dans une charge liquide chimiquement inerte, un ou plusieurs polyisocyanates ; puis en ce que l'on met en contact séparément chacun des mélanges A et/ou B obtenus avec une terre adsorbante à une température comprise entre 20°C et 80°C, cette mise en contact est réalisée en ajoutant ladite terre adsorbante aux mélanges A et/ou B puis on agite séparément pendant une durée au moins égale à 1 heure, les mélanges A et/ou B contenant ladite terre adsorbante ; puis en ce que l'on élimine des mélanges A et B ladite terre adsorbante et que l'on met en contact les mélanges A et B traités ou non-traités, après addition complémentaire éventuelle de charge liquide chimiquement inerte.

26. Procédé selon la revendication 25, caractérisé en que la mise en contact des mélanges A et/ou B avec la terre adsorbante est réalisée en faisant circuler les mélanges A et/ou B dans des colonnes séparées garnies de terre adsorbante.

27. Procédé selon l'une des revendications 25 ou 26, caractérisé en ce que les quantités pondérales de charge liquide chimiquement inerte dans les mélanges A et/ou B sont au moins égales à 40 % et, de préférence sont comprises entre 85 % et 99,5 % des mélanges A et B.

28. Procédé selon l'une des revendications 25 ou 26, caractérisé en ce que la terre absorbante est l'attapulgite.

29. Procédé selon la revendication 25, caractérisé en ce que la terre adsorbante est utilisée, dans les mélanges A et/ou B, à raison de 0,1 à 5 parties en poids, et de préférence de 1 à 3 parties en poids pour 100 parties en poids de mélange.

30. Application de la composition selon l'une des revendications 1 à 23 comme agent d'imprégnation des isolations solides contenues dans les appareils électriques.

31. Application selon la revendication 30, caractérisée ce que l'appareil électrique est un condensateur.

32. Condensateur comprenant au moins une couche de film polymère imprégnée par une composition selon l'une des revendications 1 à 23.

33. Application selon la revendication 30, caractérisé en ce que l'appareil électrique est un câble haute tension.

## Patentansprüche

1. Vernetzbare dielektrische Zusammensetzung zur Imprägnierung, enthaltend mindestens ein mehrfach ungesättigtes Polyol, mindestens ein Polyisocyanat und mindestens einen flüssigen chemisch inerten Zusatz, dadurch gekennzeichnet, daß die Funktionalität des Polyisocyanats größer oder gleich 2 ist, und daß man eine Gewichtsmenge des flüssigen, chemisch inerten Zusatzes von mehr als 90 % der Zusammensetzung verwendet, um eine Viskosität unter 50 mPa · s bei der Imprägnierungstemperatur zwischen 20°C und 90 °C während einer Dauer von mindestens einem Tag einzuhalten und um eine Tangente δ (tanδ) bei 20 °C und unter 50 Hz, nach vollständiger Vernetzung, unter 0,02 zu erhalten und daß der flüssige, chemisch inerte Zusatz kein Alkylbenzol ist.

2. Zusammensetzung nach Anspruch 1, dadurch gekennzeichnet, daß die Funktionalität des Polyisocyanats zwischen 2,2 und 4 beträgt.

3. Zusammensetzung nach Anspruch 1, dadurch gekennzeichnet, daß eine Gewichtsmenge des flüssigen, chemisch inerten Zusatzes zwischen 92 % und 96 % der Zusammensetzung benutzt wird.

4. Zusammensetzung nach Anspruch 1, dadurch gekennzeichnet, daß der flüssige, chemisch inerte Zusatz eine aus dielektrischen Estern, alkylpolyaromatischen Verbindungen, Alkylphthalaten, Mischungen von Methyldiphenylmethanen und Benzylbenzyltoluolen, Mischungen von Mono- und Bis (methylbenzyl)xylolen, Mischungen von Benzyltoluolen und Diphenylethan und pflanzlichen Ölen ausgewählte isolierende Flüssigkeit ist.

5. Zusammensetzung nach Anspruch 4, dadurch gekennzeichnet, daß das Alkylphthalat Dioctylphthalat ist.

6. Zusammensetzung nach Anspruch 4, dadurch gekennzeichnet, daß der dielektrische Ester Dibutylsebacat oder Dioctyladipat ist.

7. Zusammensetzung nach Anspruch 4, dadurch gekennzeichnet, daß das pflanzliche Öl Rapsöl ist.

8. Zusammensetzung nach Anspruch 4, dadurch gekennzeichnet, daß der flüssige, chemisch inerte Zusatz eine Mischung von Methyldiphenylmethanen und Benzylbenzyltoluolen, enthaltend 50 Gew.-% bis 90 Gew.-°% Methyldiphenylmethane (Mischung der o-, m- und p-Isomeren) und 50 Gew.-% bis 10 Gew. % Benzylbenzyltoluolen ist.

9. Zusammensetzung nach Anspruch 8, dadurch gekennzeichnet, daß der flüssige, chemisch inerte Zusatz eine Mischung, enthaltend 75 Gew.-% Methyldiphenylmethane und 25 Gew.-% Benzylbenzyltoluole ist.

10. Zusammensetzung nach einem der Ansprüche 4 bis 9, dadurch gekennzeichnet, daß der flüssige, chemisch inerte Zusatz eine Viskosität bei 20 °C von maximal 100mPa · s und vorzugsweise zwischen 4 und 30 mPa · s, gemessen gemäß der Norm ASTM D445, aufweist.

11. Zusammensetzung nach Anspruch 1, dadurch gekennzeichnet, daß das mehrfach ungesättigte Polyol ein Oligomer eines konjugierten Diens mit reaktiven Hydroxy-Endgruppen ist.

12. Zusammensetzung nach Anspruch 11, dadurch gekennzeichnet, daß das konjugierte Dien Butadien ist.

13. Zusammensetzung nach Anspruch 1, dadurch gekennzeichnet, daß das mehrfach ungesättigte Polyol eine Molmasse von höchstens 7.000, vorzugsweise zwischen 1.000 und 3.000, aufweist.

14. Zusammensetzung nach Anspruch 1, dadurch gekennzeichnet, daß das mehrfach ungesättigte Polyol eine Funktionalität zwischen 1 und 5, und vorzugsweise zwischen 1,8 und 3, aufweist.

15. Zusammensetzung nach Anspruch 1 oder 2, dadurch gekennzeichnet, daß Polyisocyanat in seinem Molekül einen cyclischen Isocyanurat aufweist.

16. Zusammensetzung nach Anspruch 15, dadurch gekennzeichnet, daß das Polyisocyanat tris-[1-(isocyanotomethyl)-1,3,3-trimethylcyclohexan]isocyanurat oder das Trimere von Hexamethyldiisocyanat ist.

17. Zusammensetzung nach Anspruch 1 oder 2, dadurch gekennzeichnet, daß das Polyisocyanat ein aromatisches Polyisocyanat ist.

18. Zusammensetzung nach Anspruch 17, dadurch gekennzeichnet, daß das Polyisocyanat 4,4'-Diphenylmethandiisocyanat (MDI) oder ein MDI-Polymeres ist.

19. Zusammensetzung nach Anspruch 1 oder 2, dadurch gekennzeichnet, daß das Polyisocyanat ein cycloaliphatisches Polyisocyanat ist.

20. Zusammensetzung nach Anspruch 19, dadurch gekennzeichnet, daß das Polyisocyanat 4,4'-Dicyclohexylmethandiisocyanat ist.

21. Zusammensetzung nach Anspruch 1, dadurch gekennzeichnet, daß sie zusätzlich ein oder mehrere Polyole mit geringer Molmasse aufweist.

22. Zusammensetzung nach Anspruch 21, dadurch gekennzeichnet, daß das Polyol eine Molmasse zwischen 50 und 800 hat.

23. Zusammensetzung nach einem der Ansprüche 1 bis 22, dadurch gekennzeichnet, daß das Molverhältnis NCO/OH nahe 1 und vorzugsweise zwischen 0,85 und 1,15 ist.

24. Zusammensetzung nach einem der Ansprüche 1 bis 23, dadurch gekennzeichnet, daß ein Katalysator verwendet wird.

25. Verfahren zur Herstellung der vernetzbaren, dielektrischen Zusammensetzung zur Imprägnierung nach einem der Ansprüche 1 bis 24, dadurch gekennzeichnet, daß man zunächst getrennt eine Mischung A durch Auflösung von einem oder mehreren Polyolen in einer Menge eines flüssigen, chemisch inerten Zusatzes und eine Mischung B, durch Auflösung von einem oder mehreren Polyisocyanaten in einer Menge eines flüssigen, chemisch inerten Zusatzes herstellt, danach jede der so erhaltenen Mischungen A und/oder B bei einer Temperatur zwischen 20°C und 80°C getrennt mit einer adsorbierenden Erde in Kontakt bringt, indem die adsorbierende Erde den MischungenA und/oder B zugefügt wird und danach während eines Zeitraums von mindestens einer Stunde gerührt wird, wobei die Mischungen A und/oder B die adsorbierende Erde enthalten, danach die adsorbierende Erde aus den MischungenA und/oder B entfernt und die gegebenenfalls behandelten MischungenA und B gegebenenfalls nach zusätzlicher Zugabe einer Menge der chemisch inerten Flüssigkeit zusammenführt.

26. Verfahren nach Anspruch 25, dadurch gekennzeichnet, daß das Inkontaktbringen der Mischungen A und/oder B mit der adsorbierenden Erde durchgeführt wird, indem die MischungenA und/oder B durch mit der adsorbierenden Erde gefüllte Säulen im Kreislauf geführt werden.

27. Verfahren nach einem der Ansprüche 25 oder 26, dadurch gekennzeichnet, daß die Gewichtsmengen des flüssigen, chemisch inerten Zusatzes in den Mischungen A und/oder B mindestens 40% und vorzugsweise zwischen 85 % und 99,5 % der Mischungen von A und B betragen.

28. Verfahren nach einem der Ansprüche 25 oder 26, dadurch gekennzeichnet, daß die adsorbierende Erde Attapulgit ist.

29. Verfahren nach Anspruch 25, dadurch gekennzeichnet, daß die adsorbierende Erde in den MischungenA und/oder B im Verhältnis von 0,1 bis 5 Gewichtsteilen und vorzugsweise 1 bis 3 Gewichtsteilen auf 100 Gewichtsteile der Mischung verwendet wird.

30. Verwendung der Zusammensetzung nach einem der Ansprüche 1 bis 23 als Imprägnierungsmittel von festen in elektrischen Geräten enthaltenen Isolierungen.

31. Verwendung nach Anspruch 30, dadurch gekennzeichnet, daß das elektrische Gerät ein Kondensator ist.

32. Kondensator enthaltend mindestens eine Schicht eines imprägnierten Polymeren mit einer Zusammensetzung nach einem der Ansprüche 1 bis 23.

33. Verwendung nach Anspruch 30, dadurch gekennzeichnet, daß das elektrische Gerät ein Hochspannungskabel ist.

## Claims

1. Crosslinkable dielectric impregnation composition comprising at least one polydiene polyol, at least one polyisocyanate and at least one chemically inert liquid charge, characterized in that the functionality of the polyisocyanate is greater than or equal to 2 and in that an amount by weight of the chemically inert liquid charge greater than 90% of the composition is used to keep the viscosity below 50 mPa.s at the impregnation temperature, which is between 20°C and 90°C, for a time at least equal to 1 day and to obtain a tanδ at 20°C and at 50 Hz, after complete crosslinking, of less than 0.02, and in that the chemically inert charge is not an alkylbenzene.

2. Composition according to Claim 1, characterized in that the functionality of the polyisocyanate is between 2.2 and 4.

3. Composition according to Claim 1, characterized in that an amount by weight of chemically inert liquid charge of between 92% and 96% of the composition is used.

4. Composition according to Claim 1, characterized in that the chemically inert liquid charge is an insulating liquid chosen from dielectric esters, alkylpolyaromatic compounds, alkyl phthalates, mixtures of benzyltoluenes and of benzylbenzyltoluenes, mixtures of. mono- and bis(methylbenzyl)xylenes, mixtures of benzyltoluenes and of diphenylethane, and vegetable oils.

5. Composition according to Claim 4, characterized in that the alkyl phthalate is dioctyl phthalate.

6. Composition according to Claim 4, characterized in that the dielectric ester is dibutyl sebacate or dioctyl adipate.

7. Composition according to Claim 4, characterized in that the vegetable oil is rapeseed oil.

8. Composition according to Claim 4, characterized in that the chemically inert liquid charge is a mixture of benzyltoluenes and of benzylbenzyltoluenes comprising from 50% to 90% by weight of benzyltoluenes (mixture of *o*, *m* and *p* isomers) and from 50% to 10% by weight of benzylbenzyltoluenes.

9. Composition according to Claim 8, characterized in that the chemically inert liquid charge is a mixture comprising 75% by weight of benzyltoluenes and 25% by weight of benzylbenzyltoluenes.

10. Composition according to one of Claims 4 to 9, characterized in that the chemically inert liquid charge has a viscosity at 20°C at most equal to 100 mPa.s and preferably between 4 and 30 mPa.s, measured according to the ASTM D445 standard.

11. Composition according to Claim 1, characterized in that the polydiene polyol is a hydroxytelechelic conjugated diene oligomer.

12. Composition according to Claim 11, characterized in that the conjugated diene is butadiene.

13. Composition according to Claim 1, characterized in that the polydiene polyol has a number-average molar mass at most equal to 7000 and, preferably, between 1000 and 3000.

14. Composition according to Claim 1, characterized in that the polydiene polyol has a functionality ranging from 1 to 5 and, preferably, ranging from 1.8 to 3.

15. Composition according to Claim 1 or 2, characterized in that the polyisocyanate contains an isocyanurate ring in its molecule.

16. Composition according to Claim 15, characterized in that the polyisocyanate is tris[1-(isocyanatomethyl)-1,3,3-trimethylcyclohexane] isocyanurate or the trimer of hexamethylene diisocyanate.

17. Composition according to Claim 1 or 2, characterized in that the polyisocyanate is an aromatic polyisocyanate.

18. Composition according to Claim 17, characterized in that the polyisocyanate is 4,4'-diphenylmethane diisocyanate (MDI) or a polymeric MDI.

19. Composition according to Claim 1 or 2, characterized in that the polyisocyanate is a cycloaliphatic polyisocyanate.

20. Composition according to Claim 19, characterized in that the polyisocyanate is 4,4'-dicyclohexylmethane diisocyanate.

21. Composition according to Claim 1, characterized in that it also comprises one or more polyols of low molar mass.

22. Composition according to Claim 21, characterized in that the polyol has a molar mass ranging from 50 to 800.

23. Composition according to any one of Claims 1 to 22, characterized in that the NCO/OH molar ratio is close to 1 and, preferably, between 0.85 and 1.15.

24. Composition according to any one of Claims 1 to 23, characterized in that a catalyst is used.

25. Process for preparing the crosslinkable dielectric impregnating composition according to one of Claims 1 to 24, characterized in that the process begins by separately preparing a mixture A, by dissolving one or more polyols in a chemically inert liquid charge, and a mixture B, by dissolving one or more polyisocyanates in a chemically inert liquid charge; then in that each of the mixtures A and/or B obtained are brought separately into contact with an adsorbent earth at a temperature of between 20°C and 80°C - this contacting process is carried out by adding the said adsorbent earth to the mixtures A and/or B and then the mixtures A and/or B containing the said adsorbent earth are stirred separately for a time of at least 1 hour; and then in that the said adsorbent earth is removed from the mixtures A and B and in that the treated or untreated mixtures A and B are brought into contact with each other after an optional complementary addition of chemically inert liquid charge.

26. Process according to Claim 25, characterized in that the process of bringing the mixtures A and/or B into contact with the adsorbent earth is carried out by making the mixtures A and/or B flow through separate columns packed with adsorbent earth.

27. Process according to either of Claims 25 and 26, characterized in that the amounts by weight of chemically inert liquid charge in the mixtures A and/or B are at least equal to 40% and, preferably, are between 85% and 99.5% of the mixtures A and B.

28. Process according to either of Claims 25 and 26, characterized in that the adsorbent earth is attapulgite.

29. Process according to Claim 25, characterized in that the adsorbent earth is used in the mixtures A and/or B in an amount of 0.1 to 5 parts by weight, and preferably from 1 to 3 parts by weight, per 100 parts by weight of mixture.

30. Application of the composition according to one of Claims 1 to 23 as an agent for impregnating the solid insulations contained in electrical apparatuses.

31. Application according to Claim 30, characterized in that the electrical apparatus is a capacitor.

32. Capacitor comprising at least one layer of polymer film impregnated by a composition according to one of Claims 1 to 23.

33. Application according to Claim 30, characterized in that the electrical apparatus is a high-voltage cable.
